(19) Europäisches Patentamt / European Patent Office / Office européen des brevets

(11) **EP 4 752 169 A1**

(12) **EUROPEAN PATENT APPLICATION**
published in accordance with Art. 153(4) EPC

(43) Date of publication:
**03.06.2026 Bulletin 2026/23**

(21) Application number: **23952222.0**

(22) Date of filing: **13.09.2023**

(51) International Patent Classification (IPC):
*C08J 5/00* (2006.01)

(52) Cooperative Patent Classification (CPC):
**C08J 5/00; C08J 5/04; C08L 1/00; C08L 61/28**

(86) International application number:
**PCT/JP2023/033366**

(87) International publication number:
**WO 2025/057328 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Risho Kogyo Co., Ltd.**
**Osaka-shi, Osaka 530-0003 (JP)**

(72) Inventor: **FURUTA, Nao**
**Amagasaki-shi, Hyogo 661-0012 (JP)**

(74) Representative: **Isarpatent**
**Patent- und Rechtsanwälte Part G mbB**
**Friedrichstrasse 31**
**80801 München (DE)**

(54) **MICROFIBRILLATED CELLULOSE MOLDED BODY AND METHOD FOR PRODUCING MICROFIBRILLATED CELLULOSE MOLDED BODY**

(57) A microfibrillated cellulose formed body consists of microfibrillated cellulose and a melamine resin, a content of the melamine resin is 20.0% by weight or more, and a water absorption when the formed body is immersed in water at 20°C for 24 hours is 1.6% or less.

FIG.1

Processed by Luminess, 75001 PARIS (FR)

EP 4 752 169 A1

## Description

Technical Field

The present disclosure relates to a microfibrillated cellulose formed body and a method for producing a microfibrillated cellulose formed body.

Background Art

Japanese Patent No. 3641690 (Patent Literature 1) discloses a high strength material using cellulose microfibrils Japanese Patent Application Publication No. 2009-96167 (Patent Literature 2) discloses a method for producing a microfibrillated cellulose formed body.

Citation List

Patent Literatures

Patent Literature 1: Japanese Patent No. 3641690
Patent Literature 2: Japanese Patent Application Publication No. 2009-96167

Summary of Invention

Technical Problem

A microfibrillated cellulose formed body with a relatively high strength is used in various environments, but high dimensional stability is required for the microfibrillated cellulose formed body. From the viewpoint of environmental resistance, it is, of course, desirable that the amount of substances contained in the formed body other than microfibrillated cellulose is as small as possible. The techniques disclosed in Patent Literatures 1 and 2 mentioned above have difficulty in addressing such issues.

It is therefore an object to provide a microfibrillated cellulose formed body having high environmental resistance and high dimensional stability.

Solution to Problem

A microfibrillated cellulose formed body according to the present disclosure consists of microfibrillated cellulose and a melamine resin. A content of the melamine resin is 20.0% by weight or more. A water absorption when the formed body is immersed in water at 20°C for 24 hours is 1.6% or less.

Advantageous Effects of Invention

This microfibrillated cellulose formed body has high environmental resistance and high dimensional stability.

Brief Description of Drawings

[FIG. 1] FIG. 1 is a schematic perspective view illustrating a configuration of a microfibrillated cellulose formed body according to one embodiment of the present disclosure.
[FIG. 2] FIG. 2 is a schematic cross-sectional view of the microfibrillated cellulose formed body illustrated in FIG. 1.
[FIG. 3] FIG. 3 is a flowchart showing typical production process steps in a method for producing a microfibrillated cellulose formed body according to one embodiment of the present disclosure.
[FIG. 4] FIG. 4 is a schematic cross-sectional view illustrating one example of a first preformed sheet.
[FIG. 5] FIG. 5 is a schematic cross-sectional view of the first preformed sheet illustrated in FIG. 4.
[FIG. 6] FIG. 6 is a schematic cross-sectional view illustrating a state where the first preformed sheet is swollen by water.
[FIG. 7] FIG. 7 is a schematic cross-sectional view illustrating a state where the formed body is immersed in a solution containing a melamine resin.

[FIG. 8] FIG. 8 is a schematic cross-sectional view in performing hot pressing.

[FIG. 9] is a schematic cross-sectional view illustrating a case where four sheets of microfibrillated cellulose-containing compositions are stacked.

Description of Embodiments

[Description of Embodiment of the Invention]

An embodiment of the present invention will be described hereinafter. A microfibrillated cellulose formed body according to the present disclosure consists of microfibrillated cellulose and a melamine resin. A content of the melamine resin is 20.0% by weight or more. A water absorption when the formed body is immersed in water at 20°C for 24 hours is 1.6% or less.

A microfibrillated cellulose formed body according to the present disclosure (hereinafter referred to simply as a "formed body") consists of microfibrillated cellulose and a melamine resin. In this microfibrillated cellulose formed body, the material contained other than microfibrillated cellulose is only the melamine resin, and thus, high environmental resistance is obtained. In addition, in the microfibrillated cellulose formed body having such a very high content of the melamine resin, the melamine resin sufficiently permeates among the fibers of microfibrillated cellulose, and thus, there are very few voids into which moisture penetrates. Accordingly, even when the formed body is exposed to a humid environment, the formed body hardly absorbs moisture. Consequently, high dimensional stability can be achieved.

Another microfibrillated cellulose formed body according to the present disclosure consist of microfibrillated cellulose, a melamine resin, and a dye. A content of the melamine resin is 20.0% by weight or more. A content of the dye is 0.3% or more. A water absorption when the formed body is immersed in water at 20°C for 24 hours is 0.6% or less. In recent years, there is a demand for using a microfibrillated cellulose formed body colored in various colors. Melamine resins are colorless and transparent, and easily realize color development by dyes. By employing the microfibrillated cellulose formed body with the configuration described above, the microfibrillated cellulose formed body is allowed to be colored in a desired color while achieving high environmental resistance and high dimensional stability.

In the microfibrillated cellulose formed body described above, the content of the melamine resin may be 31% by weight or less. This achieves high dimensional stability while further ensuring high environmental resistance.

In the microfibrillated cellulose formed body described above, the water absorption may be 0.6% or less. This microfibrillated cellulose formed body can achieve higher dimensional stability.

Another microfibrillated cellulose formed body according to the present disclosure has a plate shape and consists of microfibrillated cellulose and a melamine resin. A content of the melamine resin is 20.0% by weight or more. A dimensional change rate in a thickness direction when the formed body is immersed in water at 20°C for 24 hours is 0.6% or less.

This microfibrillated cellulose formed body can reduce the possibility of occurrence of insufficient strength or warpage due to swelling by absorbing moisture even in a high humidity environment. Accordingly, the microfibrillated cellulose formed body has enhanced convenience.

Another microfibrillated cellulose formed body according to the present disclosure has a plate shape and consists of microfibrillated cellulose, a melamine resin, and a dye. A content of the melamine resin is 20.0% by weight or more. A dimensional change rate in a thickness direction when the formed body is immersed in water at 20°C for 24 hours is 0.2% or less.

This microfibrillated cellulose formed body has good colorability, and can reduce the possibility of occurrence of insufficient strength or warpage due to swelling by absorbing moisture even in a high humidity environment. Accordingly, the microfibrillated cellulose formed body has further enhanced convenience.

In the microfibrillated cellulose formed body, a flexural modulus may be 13.0 GPa or more. This microfibrillated cellulose formed body is less likely to deform and can enhance convenience as a material.

In the microfibrillated cellulose formed body, a dimensional change rate in a length direction when the formed body is immersed in water at 20°C for 24 hours may be 0.1% or less. This microfibrillated cellulose formed body achieves high dimensional stability and further enhances convenience as a material.

A method for fabricating a microfibrillated cellulose formed body according to the present disclosure is a method for fabricating microfibrillated cellulose formed body consisting of microfibrillated cellulose and a melamine resin, and includes: preparing a first preformed sheet composed of microfibrillated cellulose and 0% by weight or more and 10% by weight or less of water; obtaining a second preformed sheet by exposing the first preformed sheet to water for one hour or more to swell the first preformed sheet; obtaining a third preformed sheet by replacing the water contained in the second preformed sheet by a solution containing a melamine resin; drying the third preformed sheet; and performing hot pressing on the dried third preformed sheet at a temperature of 120°C or more and 200°C or less by applying a pressure of 1 MPa or more and 10 MPa or less in a thickness direction.

The method for producing a microfibrillated cellulose formed body according to the present disclosure includes preparing the first preformed sheet composed of microfibrillated cellulose and 0% by weight or more and 10% by weight or less of water and obtaining the second preformed sheet by exposing the first preformed sheet to water for one hour or more to swell the first preformed sheet. Since water is a molecule having a high affinity for cellulose, water sufficiently permeates among the fibers of microfibrillated cellulose compacted in the first preformed sheet, thereby sufficiently swelling the first preformed sheet to obtain the second preformed sheet. Then, the method includes obtaining the third preformed sheet by replacing the water contained in the second preformed sheet by the solution containing a melamine resin. Here, the second preformed sheet has sufficiently swollen by water, and the distance between the fibers of microfibrillated cellulose is increased. Thus, the solution containing the melamine resin can sufficiently permeate among the fibers of microfibrillated cellulose. That is, water among the fibers of microfibrillated cellulose is replaced by the solution containing the melamine resin so that the solution containing the melamine resin can be present among the fibers of microfibrillated cellulose. Then, the third sheet is dried and subjected to hot pressing at a temperature of 120°C or more and 200°C or less by applying a pressure of 1 MPa or more and 10 MPa or less in the thickness direction, thereby thermally curing the melamine resin among the fibers of microfibrillated cellulose to obtain a microfibrillated cellulose formed body. In this microfibrillated cellulose formed body, the melamine resin sufficiently permeates among the fibers, and thus, voids into which moisture can penetrate can be reduced among the fibers. Accordingly, even when the formed body is exposed to a humid environment, the formed body hardly absorbs moisture. Consequently, high dimensional stability can be achieved. Since the hot pressing can be performed at the temperature and pressure mentioned above, a high pressure such as 100 MPa is unnecessary, and thus, high productivity is achieved.

In the method for producing a microfibrillated cellulose formed body, the performing hot pressing may include performing hot pressing on a stack of a plurality of the third preformed sheets. Accordingly, the microfibrillated cellulose formed body with a desired thickness can be easily obtained, and the inside of the microfibrillated cellulose formed body is further impregnated with the melamine resin to further enhance dimensional stability.

In the method for producing a microfibrillated cellulose formed body, the obtaining the second preformed sheet may include immersing the first preformed sheet in water stored in a container for 1.5 hours or more and 24 hours or less. In this manner, swelling by water can be more efficiently performed.

In the method for producing a microfibrillated cellulose formed body, a content of the melamine resin in the third preformed sheet may be 20.0% by weight or more and 31.0% by weight or less. This achieves high dimensional stability while maintaining high strength in microfibrillated cellulose.

[Detailed Description of Embodiments of the Present Disclosure]

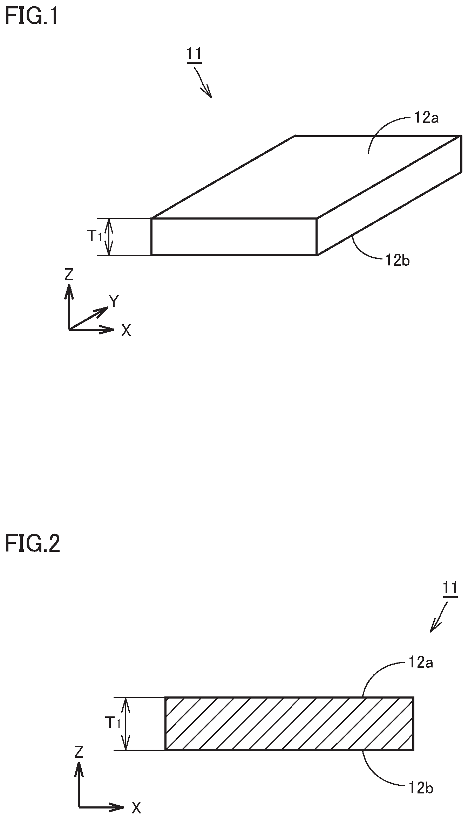

A configuration of a microfibrillated cellulose formed body according to an embodiment of the present disclosure will now be described. FIG. 1 is a schematic perspective view illustrating a configuration of a microfibrillated cellulose formed body according to one embodiment of the present disclosure. FIG. 2 is a schematic cross-sectional view of the microfibrillated cellulose formed body illustrated in FIG. 1.

With reference to FIGS. 1 and 2, a microfibrillated cellulose formed body 11 according to one embodiment of the present disclosure may have a plate shape, for example. The formed body 11 may have a thickness $T_1$ of 0.1 mm or more and 2.0 mm or less. The thickness of the formed body 11 is a length from one surface 12a of the microfibrillated cellulose formed body 11 in a thickness direction (z direction) to the other surface 12b in the thickness direction. A lateral direction (width direction) of the formed body 11 is indicated by an X direction, and a longitudinal direction (depth direction) of the formed body 11 is indicated by a Y direction.

The microfibrillated cellulose formed body 11 consists of microfibrillated cellulose and a melamine resin. In this microfibrillated cellulose formed body, the material contained other than microfibrillated cellulose is only the melamine resin, and thus, high environmental resistance is obtained.

Microfibrillated cellulose used in the microfibrillated cellulose formed body 11 according to the present disclosure is also called cellulose nanofibers, and is microfibrillated cellulose fibers. Examples of a material for microfibrillated cellulose include wood and cotton as examples of plant-derived materials, and chitin-derived materials and chitosan-derived materials as examples of animal-derived materials.

The fiber size of microfibrillated cellulose used herein is 10 nm or more and 1000 nm or less. This allows microfibrillated cellulose in the formed body 11 to be more densely entangled. Accordingly, the strength of the resulting formed body 11 can be increased.

The melamine resin may be any known resin as long as the melamine resin is a condensate obtained by condensing melamine and a derivative thereof with formaldehyde and composed of a monomer and a multimer of a dimer or more. Examples of the melamine derivative include derivatives having an imino group, a methylol group, and alkoxymethyl groups such as a methoxymethyl group and a butoxymethyl group. A compound obtained by partially or completely etherifying a melamine derivative having a methylol group through reaction with an alcohol may also be used as a monomer.

A content of the melamine resin is 20.0% by weight or more of the whole. The content of the melamine resin is preferably 31.0% by weight or less of the whole. A content of microfibrillated cellulose is preferably 69.0% by weight or more and 80.0% by weight or less of the whole. When the content of microfibrillated cellulose is 69.0% by weight or more and 80.0% by weight or less, sufficient strength as the formed body 11 can be obtained. In addition, when the content of the melamine resin is 20.0% by weight or more, the melamine resin sufficiently permeate among the fibers to reduce voids between the fibers, thereby further ensuring high dimensional stability. Further, when the content of the melamine resin is 31.0% by weight or less, it is possible to obtain high dimensional stability, while further ensuring high environmental resistance.

Regarding the water absorption of the formed body 11, the water absorption when the formed body 11 is immersed in water at 20°C for 24 hours is 1.6% or less. This formed body 11 can reduce occurrence of insufficient strength pr warpage due to swelling by absorbing moisture even under a high humidity environment. Accordingly, the formed body 11 has further enhanced convenience. The water absorption may be 0.6% or less. This formed body 11 can obtain higher dimensional stability.

Regarding the dimensional change rate of the formed body 11, the dimensional change rate in the thickness direction (hereinafter also referred to as a "thickness change rate") when the formed body 11 is immersed in water at 20°C for 24 hours is 0.6% or less. This formed body 11 can reduce occurrence of insufficient strength or warpage due to swelling by absorbing moisture even under a high humidity environment. Accordingly, the formed body 11 has further enhanced convenience. The thickness change rate may be 0.4% or less. This formed body 11 can obtain higher dimensional stability.

Regarding the dimensional change rate of the formed body 11, the dimensional change rate in the length direction (hereinafter also referred to as a "length change rate") when the formed body 11 is immersed in water at 20°C for 24 hours is 0.1% or less. This formed body 11 can reduce occurrence of insufficient strength or warpage due to swelling by absorbing moisture even under a high humidity environment. Accordingly, the formed body 11 has further enhanced convenience. The length change rate may be 0.06% or less. This formed body 11 can obtain higher dimensional stability.

In the formed body 11, the content of the melamine resin is 20.0% by weight or more and 31.0% by weight or less. This further ensures enhanced convenience of the formed body 11.

The formed body 11 has a flexural modulus of 13.0 GPa or more. This formed body 11 can obtain high strength and further enhance convenience as a material. The flexural modulus may be 14.0 GPa or more.

The formed body 11 has a flexural strength of 210 MPa or more. This formed body 11 can obtain high strength and further enhance convenience as a material. The flexural strength may be 230 MPa or more.

The formed body may consist of microfibrillated cellulose, a melamine resin, and a dye. The content of the melamine resin may be 20.0% by weight or more. The content of the dye may be 0.3% or more. The water absorption when the formed body is immersed in water at 20°C for 24 hours may be 0.6% or less. In recent years, there is a demand for using a microfibrillated cellulose formed body colored in various colors. Melamine resins are relatively highly transparent and easily realize color development by dyes. By employing the formed body with the configuration described above, the formed body is allowed to be colored in a desired color while achieving high environmental resistance and high dimensional stability.

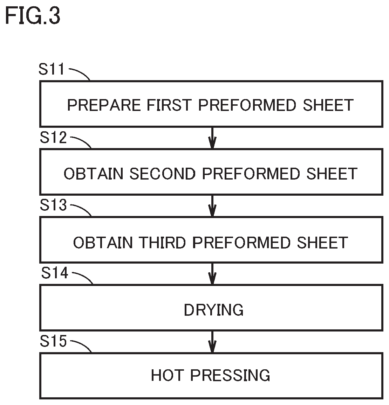

Next, a method for producing such a formed body 11 will be described. FIG. 3 is a flowchart showing typical production process steps in a method for producing a microfibrillated cellulose formed body according to one embodiment of the present disclosure.

With reference to FIG. 3, first, a first preformed sheet is prepared (step S11 in FIG. 3, "step" will be omitted hereinafter). The first preformed sheet is composed of microfibrillated cellulose and 0% by weight or more and 10% by weight or less of water.

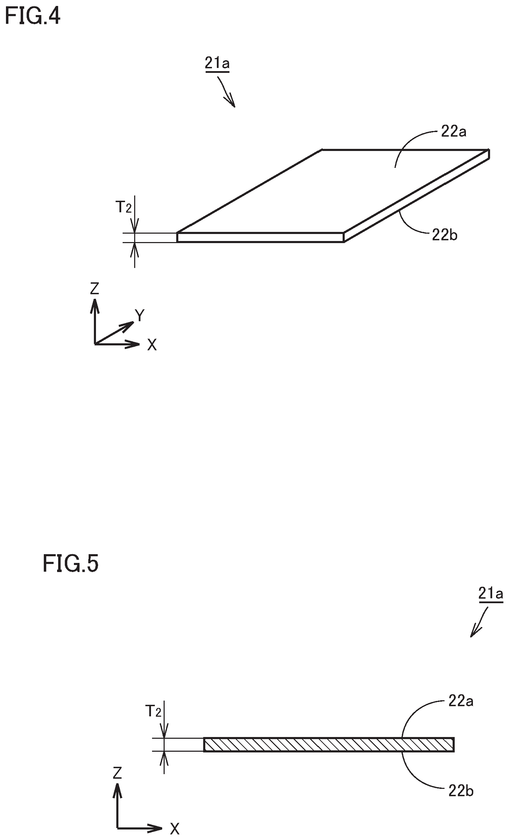

FIG. 4 is a schematic cross-sectional view illustrating one example of the first preformed sheet. FIG. 5 is a schematic cross-sectional view of the first preformed sheet illustrated in FIG. 4. With reference to FIGS. 4 and 5, a first preformed sheet 21a having a sheet shape and a thickness $T_2$ of 0.1 mm or more and 0.5 mm or less, for example, is employed. The first preformed sheet 21a is obtained in the following manner, for example. First, a dispersion in which microfibrillated cellulose is dispersed in water is prepared and is subjected to suction filtration to form a sheet, thereby obtaining a microfibrillated cellulose-containing composition having a water content of, for example, 65% by weight or more and 85% by weight or less. The microfibrillated cellulose-containing composition is compressed in the thickness direction to remove water to some extent, thereby obtaining a first preformed sheet 21a having a solid content of 90% by weight or more and 100% by weight or less. Similarly, a plurality of first preformed sheets are obtained.

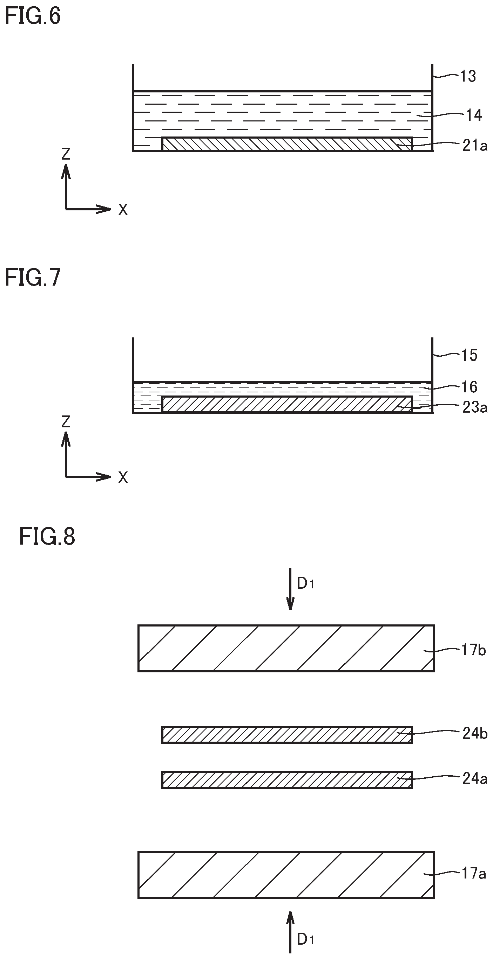

Next, the first preformed sheet 21a is exposed to water for one hour or more to swell, thereby obtaining a second preformed sheet (S12). FIG. 6 is a schematic cross-sectional view illustrating a state where the first preformed sheet 21a is swollen by water.

With reference to FIG. 6, first, in this step, a container 13 storing water 14 is prepared. Then, the first preformed sheet 21a is immersed in water. Specifically, the first preformed sheet 21a is placed in water 14 in the container 13 such that the entire surface of the first preformed sheet 21a is immersed in water 14. In this manner, the first preformed sheet 21a is exposed to water. Thereafter, the first preformed sheet 21a is left without any treatment until a predetermined time elapses.

Specifically, the first preformed sheet 21a is immersed in water 14 at 20°C for 24 hours and left without any treatment. Then, the first preformed sheet 21a swells by water 14. That is, water 14 permeates among the fibers of microfibrillated cellulose constituting the microfibrillated cellulose-containing composition. In this manner, the second preformed sheet is obtained. The second preformed sheet swells mainly in the thickness direction. The step of obtaining the second preformed sheet may include the step of immersing the first preformed sheet in water stored in the container for 72 hours or less. In this manner, swelling by water can be more efficiently performed.

The thickness of the second preformed sheet may be 160% or more of the thickness of the first preformed sheet 21a. This facilitates impregnation with the melamine resin, thereby further ensuring high dimensional stability.

Thereafter, water contained in the second preformed sheet is replaced by a solution containing a melamine resin, thereby obtaining a third preformed sheet (S13). FIG. 7 is a schematic cross-sectional view illustrating a state where the formed body is immersed in a solution containing a melamine resin.

With reference to FIG. 7, in this step, a container 15 storing a solution 16 containing a melamine resin is prepared. Then, the second preformed sheet 23a is immersed in the solution 16. Specifically, the second preformed sheet is placed in the solution 16 in the container 15 such that the entire surface of the second preformed sheet 23a is immersed in the solution 16.

Here, as the solution 16 containing the melamine resin, an aqueous solution of a melamine resin is used. That is, the solution 16 containing the melamine resin contains water. In addition to water, a water-soluble organic solvent such as methanol, ethanol, or isopropanol may also be used. Further, a mixture of water and a water-soluble organic solvent may be used.

Thereafter, the obtained third preformed sheet is dried (S14). In the drying step, the third preformed sheet is left at room temperature (25°C) for 24 hours, for example.

Subsequently, the dried third preformed sheet is subjected to hot pressing at a temperature of 120°C or more and 200°C or less by applying a pressure of 1 MPa or more and 10 MPa or less in the thickness direction (S15). In this case, the step of performing hot pressing includes the step of performing hot pressing on a stack of the third preformed sheets. FIG. 8 is a schematic cross-sectional view in performing hot pressing.

With reference to FIG. 8, a stack of two third preformed sheets 24a and 24b prepared beforehand is placed between a pair of metal plates 17a and 17b heated to a temperature of 120°C or more and 200°C or less. Then, a pressure of 1 MPa or more and 10 MPa or less is applied to the sheets in the direction indicated by arrow D1. Specifically, the temperature of the metal plates 17a and 17b is set at 150°C and a pressure of 6.5 MPa is applied to the sheets for 1.5 hours.

In this manner, the microfibrillated cellulose formed body 11 according to the present disclosure illustrated in FIG. 1 is obtained. The microfibrillated cellulose formed body 11 produced by the method for producing the microfibrillated cellulose formed body 11 consists of microfibrillated cellulose and a melamine resin. In this microfibrillated cellulose formed body 11, the material contained other than microfibrillated cellulose is only the melamine resin, and thus, high environmental resistance is obtained. The method for producing the microfibrillated cellulose formed body includes the step of preparing a first preformed sheet 21a composed of microfibrillated cellulose and 0% by weight or more and 10% by weight or less of water, exposing the first preformed sheet 21a to water for one hour or more to swell the first preformed sheet 21a, thereby obtaining a second preformed sheet 23a. Since water is a molecule having a high affinity for cellulose, water sufficiently permeates among the fibers of microfibrillated cellulose compacted in the first preformed sheet 21a, thereby sufficiently swelling the first preformed sheet 21a to obtain the second preformed sheet 23a. The method further then includes the step of a third preformed sheet by replacing water contained in the second preformed sheet by a solution containing a melamine resin. Here, the second preformed sheet has sufficiently swollen by water, and the distance between the fibers of microfibrillated cellulose is increased. Thus, the solution containing the melamine resin can sufficiently permeate among the fibers of microfibrillated cellulose. That is, water among the fibers of microfibrillated cellulose is replaced by the solution containing the melamine resin so that the solution containing the melamine resin can be present among the fibers of microfibrillated cellulose. Then, the third preformed sheet is dried and subjected to hot pressing at a temperature of 120°C or more and 200°C or less by applying a pressure of 1 MPa or more and 10 MPa or less in the thickness direction, thereby thermally curing the melamine resin among the fibers of microfibrillated cellulose to obtain a microfibrillated cellulose formed body. In this microfibrillated cellulose formed body, the melamine resin sufficiently permeates among the fibers, and thus, voids into which moisture can penetrate can be reduced among the fibers. Accordingly, even when the formed body is exposed to a humid environment, the formed body hardly absorbs moisture. Consequently, high dimensional stability can be achieved. Since the hot pressing can be performed at the temperature and pressure mentioned above, a high pressure such as 100 MPa is unnecessary, and thus, high productivity is achieved.

As described above, this method for producing the microfibrillated cellulose formed body can achieve high productivity and high dimensional stability of the resulting microfibrillated cellulose formed body.

In this case, the method includes the step of performing hot pressing on the stack of the third preformed sheets 24a and 24b. Thus, the microfibrillated cellulose formed body 11 with a desired thickness can be easily obtained, and the inside of the microfibrillated cellulose formed body 11 can be further impregnated with the melamine resin to further enhance dimensional stability.

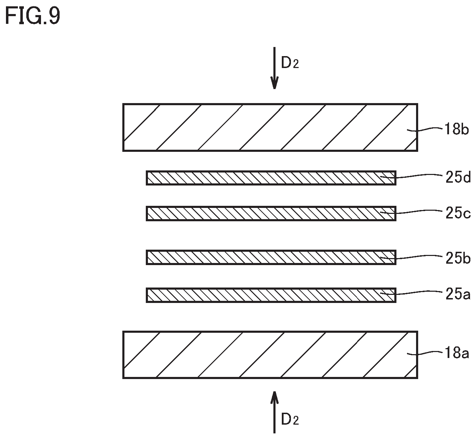

The formed body may be produced in the following manner. The step of preparing the first preformed sheet includes the step of obtaining a first preformed sheet by performing hot pressing on a stack of a plurality of sheets of microfibrillated cellulose-containing compositions containing microfibrillated cellulose. FIG. 9 is a schematic cross-sectional view illustrating a case where four sheets of microfibrillated cellulose-containing compositions are stacked.

With reference to FIG. 9, a stack of four sheet-like microfibrillated cellulose-containing compositions 25a, 25b, 25c, and 25d is placed between metal plates 18a and 18b, and a pressure is applied in the direction indicated by arrow D2, thereby obtaining a first preformed sheet. The thus-obtained preformed sheet is used to obtain a second preformed sheet in a manner similar to that described above. Then, a third preformed sheet is obtained and subjected to hot pressing, thereby obtaining a formed body 11.

In this case, a microfibrillated cellulose formed body with a desired thickness can be easily obtained, thereby enhancing productivity.

In the embodiment described above, the first preformed sheet is exposed to water to be swollen by immersing the first preformed sheet in water stored in the container. However, the present disclosure is not limited to this example, and the first preformed sheet may be exposed to running water to be swollen by water.

In the embodiment described above, in a case where the microfibrillated cellulose formed body further includes a dye, a water-soluble dye may be added to a solution containing a melamine resin and is adjusted to have a desired dye content, thereby producing a microfibrillated cellulose formed body further containing the dye.

In the embodiment described above, a urea-melamine resin may be used instead of the melamine resin.

In the embodiment described above, the first preformed sheet is prepared and is exposed to water for one hour or more to be swollen to thereby obtain the second preformed sheet, and then water contained in the second preformed sheet is replaced by the solution containing the melamine resin to thereby obtain the third preformed sheet. However, the present disclosure is not limited to this example, and the step of obtaining the second preformed sheet may be omitted. That is, the third preformed sheet may be obtained by preparing the first preformed sheet and exposing the first preformed sheet to a solution containing a melamine resin without exposing the first preformed sheet to water, and by causing the solution containing the melamine resin to permeate among the fibers of microfibrillated cellulose. Sample 6 described later is produced by this technique.

Examples

Formed bodies were formed according to the blends and methods shown in Samples 1 to 10, and evaluation tests were conducted. Evaluation results are shown in Table 1. Samples 1 to 7 fall within the range of the present disclosure. Samples 8 to 10 fall outside the range of the present disclosure.

(Sample 1)

Microfibrillated cellulose (produced by Sugino Machine Limited, "BiNFi-S BMa10010": fiber diameter of 10 nm to 50 nm or less) dispersed in water at a concentration of 10% by weight was prepared. Then, the microfibrillated cellulose was diluted with water to 1% by weight, and then, water was removed by filtration until the moisture content reached 85% by weight, resulting in a sheet-like MFC-containing composition with a thickness of 2.0 mm.

Next, one sheet-like MFC-containing composition is sandwiched between two glass nonwoven fabrics with a basis weight of 47 g/cm$^2$, then placed between two stainless steel metal plates, and subjected to heating and pressurized formation at 150°C for two hours, thereby obtaining a first preformed sheet. The pressure was increased stepwise from 0.5 MPa to ultimately reach 4 MPa. The thickness of the obtained first preformed sheet was 0.4 mm, and the moisture content was 0% by weight or more and 10% by weight or less.

The first preformed sheet was immersed in water at 20°C for 24 hours, thereby obtaining a second preformed sheet. The second preformed sheet had a thickness of 0.7 mm.

Next, the second preformed sheet was immersed for 24 hours in a melamine resin solution (solid content: 40% by weight) prepared by dissolving a water-soluble methylol melamine resin ("Nikaresin S-260" manufactured by Nippon Carbide Industries Co., Inc.) in hot water at 40°C, thereby obtaining a third preformed sheet.

Thereafter, the obtained third preformed sheet was dried at room temperature (25°C) for 24 hours. Two dried third preformed sheets were sandwiched between two stainless steel metal plates and subjected to heating and pressurized formation at 150°C under a pressure of 6.5 MPa for one hour, thereby obtaining a formed body consisting of microfibrillated cellulose and a melamine resin.

The obtained formed body was milk white, and had a thickness of 1.0 mm and a density of 1.41 g/cm$^3$. The content of the melamine resin was 30.3% by weight. In an environment with a temperature of 20°C and a relative humidity of 65%, the flexural modulus was 14.2 GPa and the flexural strength was 247 MPa. The water absorption when the formed body was immersed in water at 20°C for 24 hours was 0.6%, and the dimensional change rate in the thickness direction was 0.3%. The dimensional change rate in the length direction (hereinafter also referred to as a "length change rate") when the formed body was immersed in water at 20°C for 24 hours was 0.06%.

The water absorption was determined by the following method in conformity with "JIS A5905." A test piece (10 cm×10 cm) of a formed body that had been cured in advance for 72 hours or more in an environment with a temperature of 20°C and a relative humidity of 65% was immersed in water at 20°C for 24 hours. Thereafter, using a measured weight ($W_1$) of the test piece before immersion and a measured weight ($W_2$) of the test piece after immersion, the water absorption was calculated by Equation 1:

$$\text{Water absorption (\%)} = ((W_2 - W_1)/W_1) \times 100 \qquad (1)$$

The thickness change rate was obtained by the following method in conformity with "JIS A5905." A test piece (10 cm×10 cm) of a formed body that had been cured in advance for 72 hours or more in an environment with a temperature of 20°C and a relative humidity of 65% was immersed in water at 20°C for 24 hours. Thereafter, using a measured thickness ($T_1$) of the test piece before immersion and a measured thickness ($T_2$) of the test piece after immersion, the thickness change rate was calculated by Equation 2:

$$\text{Thickness change rate (\%)} = ((T_2 - T_1)/T_1) \times 100 \qquad (2)$$

The length change rate was obtained by the following method in conformity with "JIS A5905." A test piece (10 cm×10 cm) of a formed body that had been cured in advance for 72 hours or more in an environment with a temperature of 20°C and a relative humidity of 65% was immersed in water at 20°C for 24 hours. Thereafter, using a measured length ($L_1$) of one side of the test piece before immersion and a measured length ($L_2$) of one side of the test piece after immersion, the length change rate was calculated by Equation 3: Here, regarding the length of one side of the test piece for the length ($L_1$) and length ($L_2$), the length showing the greater change rate in the longitudinal direction or the transverse direction was employed.

$$\text{Length change rate (\%)} = ((L_2 - L_1)/L_1) \times 100 \qquad (3)$$

For this formed body, a flexural modulus, a flexural strength, and a density were measured. The measurement was performed in conformity with JIS-K6911. The same holds for the measurement of the samples below.

(Sample 2)

A formed body was obtained in the same manner as that for Sample 1 except for obtaining a third preformed sheet by immersing the formed body in a melamine resin aqueous solution (solid content: 40% by weight) for 1.5 hours. The obtained formed body was milk white, and had a thickness of 0.95 mm and a density of 1.39 g/cm$^3$. The content of the melamine resin was 21.6% by weight. In an environment with a temperature of 20°C and a relative humidity of 65%, the flexural modulus was 15.4 GPa and the flexural strength was 225 MPa. The water absorption when the formed body was immersed in water at 20°C for 24 hours was 1.6%, and the length change rate and the thickness change rate were 0.09% and 0.6%, respectively.

(Sample 3)

A formed body was obtained in the same manner as that for Sample 1 except for obtaining a third preformed sheet by immersing the formed body in a melamine resin aqueous solution (solid content: 40% by weight) for three hours. The obtained formed body was milk white, and had a thickness of 1.0 mm and a density of 1.41 g/cm$^3$. The content of the melamine resin was 25.7% by weight. In an environment with a temperature of 20°C and a relative humidity of 65%, the flexural modulus was 15.1 GPa and the flexural strength was 213 MPa. The water absorption when the formed body was immersed in water at 20°C for 24 hours was 1.1%, and the length change rate and the thickness change rate were 0.07% and 0.4%, respectively.

(Sample 4)

A formed body was obtained in the same manner as that for Sample 1, except that eight third preformed sheets were stacked and subjected to heating and pressurized formation. The obtained formed body was milk white, and had a thickness of 4.0 mm and a density of 1.41 g/cm$^3$. The content of the melamine resin was 30.3% by weight. In an environment with a temperature of 20°C and a relative humidity of 65%, the flexural modulus was 14.2 GPa and the flexural strength was 247 MPa. The water absorption when the formed body was immersed in water at 20°C for 24 hours was 0.3%, and the length change rate and the thickness change rate were 0.04% and 0.2%, respectively.

(Sample 5)

A formed body was obtained in the same manner as that for Sample 1, except that 20 third preformed sheets were stacked and subjected to heating and pressurized formation. The obtained formed body was milk white, and had a thickness of 10.0 mm and a density of 1.41 g/cm$^3$. The content of the melamine resin was 30.3% by weight. In an environment with a temperature of 20°C and a relative humidity of 65%, the flexural modulus was 14.2 GPa and the flexural strength was 247 MPa. The water absorption when the formed body was immersed in water at 20°C for 24 hours was 0.2%, and the length change rate and the thickness change rate were 0.02% and 0.2%, respectively.

(Sample 6)

A formed body was obtained in the same manner as that for Sample 1, except that the first preformed sheet was not immersed in water at 20°C. The obtained formed body was milk white, and had a thickness of 1.0 mm and a density of 1.42 g/cm$^3$. The content of the melamine resin was 29.1% by weight. In an environment with a temperature of 20°C and a relative humidity of 65%, the flexural modulus was 13.7 GPa and the flexural strength was 218 MPa. The water absorption when the formed body was immersed in water at 20°C for 24 hours was 0.8%, and the length change rate and the thickness change rate were 0.09% and 0.4%, respectively.

(Sample 7)

A formed body was obtained in the same manner as that for Sample 1, except that a one part by weight of a water-soluble black dye ("Direct Fast Black B 300%" manufactured by Okamoto Dyestuff Co., Ltd.) was added to the melamine resin solution. The obtained formed body was black, and had a thickness of 1.0 mm and a density of 1.39 g/cm$^3$. The content of the melamine resin was 28.8% by weight. The content of the dye was 0.3% by weight. In an environment with a temperature of 20°C and a relative humidity of 65%, the flexural modulus was 13.4 GPa and the flexural strength was 230 MPa. The water absorption when the formed body was immersed in water at 20°C for 24 hours was 0.6%, and the length change rate and the thickness change rate were 0.02% and 0.2%, respectively.

(Sample 8)

Two sheets of a sheet-like microfibrillated cellulose-containing composition with a moisture content of 85% by weight and a thickness of 2.5 mm were stacked and subjected to heating and pressurized formation at a pressing temperature of 150°C, a pressing pressure of 4 MPa, and a pressing time of two hours to obtain a formed body. The obtained formed body was milk white, and had a thickness of 1.0 mm and a density of 1.33 g/cm$^3$. In an environment with a temperature of 20°C and a relative humidity of 65%, the flexural modulus was 10.5 GPa and the flexural strength was 146 MPa. The water absorption when the formed body was immersed in water at 20°C for 24 hours was 55.8%, and the length change rate and the thickness change rate were 0.94% and 62.0%, respectively.

(Sample 9)

A formed body was obtained in the same manner as that for Sample 1, except that a phenolic resin was used instead of the melamine resin. The obtained formed body was dark brown, and had a thickness of 1.0 mm and a density of 1.40 g/cm$^3$. The content of the phenolic resin was 26.5% by weight. In an environment with a temperature of 20°C and a relative humidity of 65%, the flexural modulus was 11.0 GPa and the flexural strength was 245 MPa. The water absorption when the formed body was immersed in water at 20°C for 24 hours was 1.9%, and the length change rate and the thickness change rate were 0.19% and 1.4%, respectively.

(Sample 10)

A formed body was obtained in the same manner as that for Sample 1, except that the impregnation time of the resin was 0.2 hours. The obtained formed body was milk white, and had a thickness of 0.9 mm and a density of 1.38 g/cm$^3$. The content of the melamine resin was 11.7% by weight. In an environment with a temperature of 20°C and a relative humidity of 65%, the flexural modulus was 13.8 GPa and the flexural strength was 218 MPa. The water absorption when the formed body was immersed in water at 20°C for 24 hours was 2.0%, and the length change rate and the thickness change rate were 0.12% and 2.0%, respectively.

Table 1

| | Sample 1 | Sample 2 | Sample 3 | Sample 4 | Sample 5 | Sample 6 | Sample 7 | Sample 8 | Sample 9 | Sample 10 |
|---|---|---|---|---|---|---|---|---|---|---|
| Resin | Melamine Resin | Melamine Resin | Melamine Resin | Melamine Resin | Melamine Resin | Melamine Resin | Melamine Resin | - | Phenolic Resin | Melamine Resin |
| Dye | - | - | - | - | - | - | black dye | - | - | - |
| Number of stacked first preformed sheets | 1 | 1 | 1 | 1 | 1 | 1 | 1 | 2 | 1 | 1 |
| Number of stacked third preformed sheets | 2 | 2 | 2 | 8 | 20 | 2 | 2 | 0 | 1 | 2 |
| Immersion time (hour) | 24 | 24 | 24 | 24 | 24 | 0 | 24 | 0 | 24 | 24 |
| Resin impregnation time (hour) | 24 | 1.5 | 3 | 24 | 24 | 24 | 24 | 0 | 24 | 0.2 |
| Color | milk white | milk white | milk white | milk white | milk white | milk white | black | milk white | dark brown | milk white |
| Thickness (mm) | 1.0 | 0.95 | 1.0 | 4.0 | 10.0 | 1.0 | 1.0 | 1.0 | 1.0 | 0.90 |
| Density (g/cm³) | 1,41 | 1.39 | 1.41 | 1.41 | 1.41 | 1.42 | 1.39 | 1.33 | 1.40 | 1.38 |
| Resin content (wt%) | 30.3 | 21.6 | 25.7 | 30.3 | 30.3 | 29.1 | 28.8 | 0 | 26.5 | 11.7 |
| Dye content (wt%) | 0 | 0 | 0 | 0 | 0 | 0 | 0.3 | 0 | 0 | 0 |
| Flexural modulus(GPa) | 14.2 | 15.4 | 15.1 | 14.2 | 14.2 | 13.7 | 13.4 | 10.5 | 11.0 | 13.8 |
| Flexural strength (MPa) | 247 | 225 | 213 | 247 | 247 | 218 | 230 | 146 | 245 | 218 |
| Water absorption (%) | 0.6 | 1.6 | 1.1 | 0.3 | 0.2 | 0.8 | 0.6 | 55.8 | 1.9 | 2.0 |
| Length change rate (%) | 0.06 | 0.09 | 0.07 | 0.04 | 0.02 | 0.09 | 0.02 | 0.94 | 0.19 | 0.12 |
| Thickness change rate (%) | 0.3 | 0.6 | 0.4 | 0.2 | 0.2 | 0.4 | 0.2 | 62.0 | 1.4 | 2.0 |

With reference to Table 1, in each of Samples 1 to 7, the content of the melamine resin is 20.0% by weight or more and the water absorption is 1.6% or less. Specifically, the content of the phenolic resin is 31.0% by weight or less. The dimensional change rate in the thickness direction when the formed body is immersed in water at 20°C for 24 hours is 1.6% or less in each sample. The dimensional change rate in the length direction when the formed body is immersed in water at 20°C for 24 hours is 0.10% or less in each sample. The flexural modulus is 13.0 GPa or more in each sample. The flexural strength is 210 MPa or more in each sample. In Samples 1 to 6, the color is milk white, and is black in Sample 7. Sample 7 sufficiently expresses the color of the black dye.

On the other hand, Sample 8 contains no resin, where the water absorption is 55.8% and the thickness change rate is 62.0%. The length change rate is 0.94%. In such a formed body, it is believed that the absence of a resin at the interface of the stack of the formed body allows water to permeate among the fibers constituting the formed body and swell the formed body, resulting in an increase in water absorption, thickness change rate, and length change rate. The flexural modulus and the flexural strength are also lower than those in Samples 1 to 7.

Sample 9 uses a phenolic resin instead of the melamine resin, where the water absorption is 1.9% and the thickness change rate is 1.4%. The length change rate is 0.19%. In such a formed body, it is believed that the interface of the stack of the formed body is insufficiently wetted with the phenolic resin so that the bonding strength between layers decreases, resulting in an increase in water absorption, thickness change rate, and length change rate. The flexural modulus is also lower than those in Samples 1 to 7.

For Sample 10, the resin impregnation time of the melamine resin is short, the resin content is 11.7% by weight, the water absorption is 2.0%, and the thickness change rate is 2.0%. The length change rate is 0.12%. In such a formed body, it is believed that the interface of the stack of the formed body is insufficiently wetted with the melamine resin, resulting in a decrease in bonding strength between layers and an increase in water absorption, thickness change rate, and length change rate.

It should be understood that the embodiment disclosed here is illustrative and non-restrictive in every respect. The scope of the present invention is defined by the terms of the claims, rather than the description above, and is intended to include any modifications within the scope and meaning equivalent to the terms of the claims.

Description of Symbols

11 microfibrillated cellulose formed body, 12a, 12b surface, 13, 15 container, 14 water, 16 solution, 17a, 17b, 18a, 18b metal plate, 21a first preformed sheet, 23a second preformed sheet, 24a, 24b third preformed sheet, 25a, 25b, 25c, 25d microfibrillated cellulose-containing composition

**Claims**

1. A microfibrillated cellulose formed body consisting of:

   microfibrillated cellulose; and
   a melamine resin, wherein
   a content of the melamine resin is 20.0% by weight or more, and
   a water when the formed body is immersed in water at 20°C for 24 hours is 1.6% or less

2. A microfibrillated cellulose formed body consisting of:

   microfibrillated cellulose;
   a melamine resin; and
   a dye, wherein
   a content of the melamine resin is 20.0% by weight or more,
   a content of the dye is 0.3% or more, and
   a water absorption when the formed body is immersed in water at 20°C for 24 hours is 0.6% or less.

3. The microfibrillated cellulose formed body according to claim 1 or 2, wherein the content of the melamine resin is 31.0% by weight or less.

4. The microfibrillated cellulose formed body according to claim 1 or 2, wherein the water absorption is 0.6% or less.

5. A microfibrillated cellulose formed body having a plate shape, and consisting of microfibrillated cellulose and a melamine resin, wherein

a content of the melamine resin is 20.0% by weight or more, and
a dimensional change rate in a thickness direction when the formed body is immersed in water at 20°C for 24 hours is 0.6% or less.

6. A microfibrillated cellulose formed body having a plate shape, and consisting of microfibrillated cellulose, a melamine resin, and a dye, wherein

a content of the melamine resin is 20.0% by weight or more, and
a dimensional change rate in a thickness direction when the formed body is immersed in water at 20°C for 24 hours is 0.2% or less.

7. The microfibrillated cellulose formed body according to claim 5 or 6, wherein a flexural modulus is 13.0 GPa or more.

8. The microfibrillated cellulose formed body according to claim 5 or 6, wherein a dimensional change rate in a length direction when the formed body is immersed in water at 20°C for 24 hours is 0.1% or less.

9. A method for producing a microfibrillated cellulose formed body consisting of microfibrillated cellulose and a melamine resin, the method comprising:

preparing a first preformed sheet composed of microfibrillated cellulose and 0% by weight or more and 10% by weight or less of water;
obtaining a second preformed sheet by exposing the first preformed sheet to water for one hour or more to swell the first preformed sheet;
obtaining a third preformed sheet by replacing the water contained in the second preformed sheet by a solution containing a melamine resin;
drying the third preformed sheet; and
performing hot pressing on the dried third preformed sheet at a temperature of 120°C or more and 200°C or less by applying a pressure of 1 MPa or more and 10 MPa or less in a thickness direction.

10. The method for producing a microfibrillated cellulose formed body according to claim 9, wherein the performing hot pressing includes performing hot pressing on a stack of a plurality of the third preformed sheets.

11. The method for producing a microfibrillated cellulose formed body according to claim 9 or 10, wherein the obtaining the second preformed sheet includes immersing the first preformed sheet in water stored in a container for 1.5 hours or more and 24 hours or less.

12. The method for producing a microfibrillated cellulose formed body according to claim 9 or 10, wherein a content of the melamine resin in the third preformed sheet is 20.0% by weight or more and 31.0% by weight or less.

FIG.1

11

12a

T1

12b

Z
Y
X

FIG.2

11

12a

T1

12b

Z
X

FIG.3

S11 ── PREPARE FIRST PREFORMED SHEET

S12 ── OBTAIN SECOND PREFORMED SHEET

S13 ── OBTAIN THIRD PREFORMED SHEET

S14 ── DRYING

S15 ── HOT PRESSING

FIG.4

21a

22a

T₂

22b

Z

Y

X

FIG.5

21a

T₂

22a

Z

22b

X

FIG.6

```
                                    ┌──────── 13
        ╷
        │
        Z
        └──→ X
```

FIG.7

```
                                    ┌──────── 15
        ╷
        │
        Z
        └──→ X
```

FIG.8

```
        ↓ D₁

        ┌──────────────┐ ─ 17b

        ┌──────────────┐ ─ 24b

        ┌──────────────┐ ─ 24a

        ┌──────────────┐ ─ 17a

        ↑ D₁
```

FIG.9

## INTERNATIONAL SEARCH REPORT

| International application No. |
| --- |
| **PCT/JP2023/033366** |

| A. | CLASSIFICATION OF SUBJECT MATTER |
| --- | --- |

*C08J 5/00*(2006.01)i
FI:   C08J5/00

According to International Patent Classification (IPC) or to both national classification and IPC

| B. | FIELDS SEARCHED |
| --- | --- |

Minimum documentation searched (classification system followed by classification symbols)

C08J5/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2020-50780 A (OSAKA SODA CO., LTD.) 02 April 2020 (2020-04-02) | 1, 4-8 |
|  | claims, paragraphs [0028]-[0045], examples | |
| Y | | 2 |
| A | | 9-12 |
| X | CN 109532147 A (CHANGSHA XIAORU INF TECH CO., LTD.) 29 March 2019 (2019-03-29) | 1, 3-8 |
|  | claims, examples | |
| Y | | 2 |
| A | | 9-12 |
| Y | JP 2012-530857 A (INTERFACE INTERNATIONAL B.V.) 06 December 2012 (2012-12-06) | 2 |
|  | claims, examples | |
| A | | 9-12 |
| A | JP 2021-155857 A (KYOTO UNIVERSITY) 07 October 2021 (2021-10-07) | 1-12 |
|  | entire text | |

☑ Further documents are listed in the continuation of Box C.   ☑ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **07 November 2023** | **21 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
| | Telephone No. |

Form PCT/ISA/210 (second sheet) (January 2015)

## INTERNATIONAL SEARCH REPORT

| | International application No. |
| --- | --- |
| | **PCT/JP2023/033366** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2018-527478 A (STORA ENSO OYJ) 20 September 2018 (2018-09-20) entire text | 1-12 |
| A | JP 4-367199 A (PIONEER CORPORATION) 18 December 1992 (1992-12-18) examples | 1-12 |

Form PCT/ISA/210 (second sheet) (January 2015)

**INTERNATIONAL SEARCH REPORT**
Information on patent family members

International application No.

**PCT/JP2023/033366**

| Patent document cited in search report | | | Publication date (day/month/year) | Patent family member(s) | Publication date (day/month/year) |
|---|---|---|---|---|---|
| JP | 2020-50780 | A | 02 April 2020 | (Family: none) | |
| CN | 109532147 | A | 29 March 2019 | (Family: none) | |
| JP | 2012-530857 | A | 06 December 2012 | US 2012/0187226 A1 claims, examples | |
| JP | 2021-155857 | A | 07 October 2021 | (Family: none) | |
| JP | 2018-527478 | A | 20 September 2018 | US 2019/0048527 A1 entire text | |
| JP | 4-367199 | A | 18 December 1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3641690 B

- JP 2009096167 A